(19) Europäisches Patentamt
European Patent Office
Office européen des brevets

(11) **EP 4 707 261 A1**

(12) **EUROPEAN PATENT APPLICATION**

(43) Date of publication:
**11.03.2026 Bulletin 2026/11**

(21) Application number: **24198983.9**

(22) Date of filing: **06.09.2024**

(51) International Patent Classification (IPC):
**C04B 38/00** [(2006.01)]   **C04B 35/111** [(2006.01)]
**C04B 35/626** [(2006.01)]   **C04B 35/634** [(2006.01)]
**C04B 35/638** [(2006.01)]   **B01J 20/08** [(2006.01)]
**B01J 20/30** [(2006.01)]

(52) Cooperative Patent Classification (CPC):
(C-Sets available)
**C04B 35/111; B01J 20/06; B01J 20/08;
B01J 20/2803; B01J 20/3028; B01J 20/3042;
C04B 35/6263; C04B 35/6264; C04B 35/62655;
C04B 35/6342; C04B 35/63444; C04B 35/63448;
C04B 35/638; C04B 38/009;** C04B 2111/00146;
(Cont.)

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**GE KH MA MD TN**

(71) Applicant: **Eurekite Holding B.V.
7521 WC Enschede (NL)**

(72) Inventors:
• **STANKEVICIUTE-BRAKER, Ruta
7531BR Enschede (NL)**
• **CADAFALCH GAZQUEZ, Gerard
6227RC Maastricht (NL)**
• **TEN HOVE, Marcel
7543GJ Enschede (NL)**

(74) Representative: **Andrejewski - Honke
Patent- und Rechtsanwälte Partnerschaft mbB
An der Reichsbank 8
45127 Essen (DE)**

Remarks:
Amended claims in accordance with Rule 137(2) EPC.

(54) **PROCESS TO MAKE FLUID ABSORBING CERAMIC PARTICLES**

(57) The present invention is directed to a process to make fluid absorbing ceramic particles (4) comprising the following steps:

preparing a ceramic dispersion solution using at least a ceramic, a solvent and a polymeric binder;
using the electro spraying method to direct fine droplets of the dispersion solution leaving a nozzle (2) in a mainly vertical jet to a coagulation bath (3) containing a non-solvent liquid with respect to the electro-sprayed solution;
flattening the droplets inside the coagulation bath (3) with the non-solvents solidifying to the shape of the particles (4);
finally filtering and sintering the solid particles (4).

<u>Fig. 1</u>

Taylor cone

EP 4 707 261 A1

**(Cont. next page)**

(52) Cooperative Patent Classification (CPC): (Cont.)
C04B 2111/00284; C04B 2111/00793;
C04B 2235/3217; C04B 2235/5292;
C04B 2235/5296; C04B 2235/5436;
C04B 2235/5445; C04B 2235/6562;
C04B 2235/6567

C-Sets
**C04B 38/009, C04B 35/111, C04B 38/04,
C04B 38/0054, C04B 38/067, C04B 38/0074**

**Description**

The present invention is directed to a process to make fluid absorbing ceramic particles.

It is known that ceramic particles are capable of absorbing fluids due to their porosity. Especially water can be absorbed. Furthermore, even organic fluids like e.g. oil is absorbed. Therefore, ceramic particles are an interesting class of materials in order to remove fluids and especially water and/or oil.

In recent years many attempts have been made to reduce the emission of oily fluids and their environmental impact. Because many industrial processes, for example the oil exploration industry, generates large volumes of water contaminated with oil which is called oily waters. Oily waters must be treated before its discard in order to meet the criteria established by environmental agencies.

There are several methods known in order to treat oily water via ceramic membranes. One example in this regard is disclosed in the publication "Oily water treatment using ceramic membrane in presence of swirling flow induced by a tangential inlet via CFD" (https://www.scientific.net/DDF.348.51).

However, ceramic membranes are difficult to handle and do not work in order to remove the said fluids e.g. from a surface.

For this reason, large particle ceramic granules have been used for sewage absorption and purification equipment as disclosed in CN 217972896 U. The said ceramic granules are arranged at the upper end of a grating baffle.

Other publications like CN 106984290 B describe a preparation method of composite microsphere capable of absorbing heavy metal ions. From this publication it is known to prepare a mixed solution of magnetic nanoparticles adding high-pressure static electricity on a needle.

It is an object of the present invention to provide ceramic particles in an easy and effective way in order to provide particles with increased absorption.

In order to solve this problem, a process according to claim 1 is disclosed. Due to the claimed process of claim 1 in a first step a ceramic dispersion solution as e.g. particle precursor solution is prepared. For this reason a corresponding device normally uses a vessel to mix a corresponding ceramic metal salt and/or organometallic together with the solvent and the polymeric binder. The ceramic is provided as a powder or as particles or even granules. The process is comparable to the preparation of fibers instead of particles as has been disclosed in WO 2017/216367 A1 of the applicant.

The ceramic metal salt and/or organometal used to prepare the said mixture means a salt or organometal on the basis of a ceramic metal oxide. Organometal means a compound containing at least a metal atom bonded to an organic group or groups. Especially aluminum oxide ($Al_2O_3$) is used. The general process works in that way that the metal salt is part of the metal oxide precursor and then finally results in the desired ceramic metal oxide particle. For this reason, homogenous and mainly round oxide-based ceramic particles with a typical diameter of 0.2 to 0.5 $\mu$m are preferably used to prepare the mixture respective ceramic dispersion solution.

The content of the solid amount respective the round oxide-based ceramic particles in the mixture respective dispersion solution ranges from 40 to 60 mass% and is especially in the range from 40 to 50 mass%. The solvent used in this regard may be N-Methyl-2-Pyrrolidone (NMP), Dimethylsulfoxide (DMSO), Cyclohexanon, Cyrene, Gamma-Butyrolactone (GBL) or comparable solvents. The content of the solvent in the mixture is between 40 and 60 mass%. The polymeric binder is used in an amount of approx. 5 to 10 mass%.

With this mixture, the dynamic viscosity of the dispersion solution is normally kept between 100 and 300 mPas. Typical binders are Polyether-Sulfone (PES), Polyvinylpyrrolidone (PVP), Polyvinylbutyral (PVB) or Polyethyleneimine (PEI). The dynamic viscosity can be measured by a viscometer based on the time taken to flow through an orifice or a capillary tube at a standard temperature.

After preparing the mixture, the spraying method, especially the electro spraying method, is used to direct fine droplets leaving a nozzle of a corresponding spraying unit in a mainly vertical jet to a coagulation bath to which the droplets are directed and emerge. Indeed the polymeric binder in the mixture ensures that the droplets leave the nozzle with the necessary cohesive strength.

In the spraying unit the mixture is collected in a reservoir which is connected to a syringe. An electrical potential is applied between the coagulation bath and the syringe or the nozzle at the tip of the syringe which is conductive. Therefore, an electric field is generated around the liquid.

As the electric field strength increases, the surface tension of the liquid is overcome at the tip of the nozzle, therefore forming a cone-like shape called the Taylor cone. As soon as the electric field reaches and passes a critical strength, a jet formed at the tip of the Taylor cone breaks up into fine droplets due to the electrostatic force acting on the nozzle. The droplets are charged and then travel in a mainly vertical jet towards the coagulation bath. This is normally achieved by a voltage of the electric field of more than 1 kV. Even voltages of more than 10 kV can be applied.

The coagulation bath contains a non-solvent with respect to the sprayed solution. During the journey from the nozzle to the coagulation bath the solvent inside the fine droplets starts to evaporate. Upon landing on the surface of the non-solvent bath and inside the bath the droplets flatten. This flattening is accompanied by a shape formation process during phase separation between the mainly residual solid/binder face on the one hand and the solvent/coagulation bath on the other hand as the remaining solvent within the particles rapidly exchanges with the non-solvent. This exchange additionally creates pores throughout the particles.

During this process the unstructured polymeric binder within the particles maintains a dynamic equilibrium between dissolving and precipitating out. As all the solvent diffuses into the non-solvent of the coagulation bath, the non-solvent solidifies the shape of the particles resulting in the formation of solid particles. Finally, the said solid particles are filtered and sintered in order to remove the residual binder component respective to burn out any residual (organic) components from the shaped solid ceramic particles. Preferably the particles define a half sphere or hemisphere with a given diameter and a cross section of the particles. The particles mainly have a platelet shape with a spheroid character. Indeed a flattening f can be defined as being the ratio between the difference between the diameter d and the cross section c compared to the diameter d.

This means that a flattening value f of nearly 1 results in an increasing flattening. In cases where the diameter d is equal to the cross section c, the particles are perfect spheres. In cases where the aforementioned ratio between the cross-section c and the diameter d amounts to 0.5, the particles are half-spheres.

It has been found out that increasing the flattening f results in increasing the fluid absorption and especially the water absorption. This is described in detail in the example. A reason for this behavior is explained by the fact that increasing the flattening f results in a shape with increased surface area and therefore resulting in increased fluid absorption.

Concerning the coagulation bath, the invention normally uses clean water. It is also possible to optionally work with additives to lower the surface tension. The clean water mainly used is demineralized water. In order to get a perfect shape of the particles, it is advisable to work with a duration of coagulation in the said coagulation bath of at least one hour. Mainly several hours are needed up to approx. 8 hours. The temperature of the coagulation bath is preferably set to 15 °C up to 40 °C.

As already described, the solid particles can be filtered from the coagulation bath. In order to remove any residual further components and especially the polymeric binder, the filtered and shaped particles are sintered. In order to sinter the particles, an oven is provided offering temperatures of more than 1000°C. The dwell time is normally set to at least 1 hour and mainly to 3 hours. In order to burn out the residual components and not to destroy the particles, it is advisable to work with ramp rates of temperature increase per time in the region of 300 °C per hour.

The particles produced in this manner can be used for different purposes in order to absorb especially water and/or oil. One possible application may be to remove the said fluids from surfaces of machine made parts in machine building, automotive, in the oil exploration industry and so on. Due to the ceramic character of the particles no risk to health exists so that even applications in healthcare are possible.

In the following the invention is detailed described referring to figures 1 to 3, where

Figure 1    shows the schematic device to make fluid-absorbing ceramic particles according to the invention,

Figure 2    shows the particle and its dimensions and

Figure 3    shows a graph of the water absorption versus the flattening of the particle.

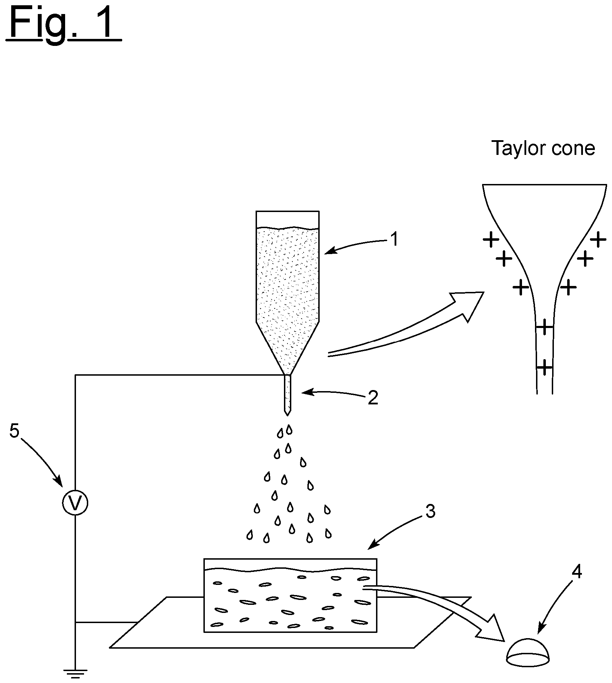

Figure 1 shows a device capable of producing the fluid-absorbing ceramic particles according to the invention. For this reason, first of all, a vessel or a comparable tool is used to mix the ceramic powder or granules (made from e.g. metal salt and/or organometal), the solvent and the polymeric binder. E.g. round particles of aluminum oxide ($Al_2O_3$) with a diameter of up to 0.5 $\mu$m and a mass content of approx. 40 mass% are solved in a typical solvent like N-methyl-2-pyrrolidone (NMP), as has been described earlier. The amount of solvent in the mixture is approx. 50 mass%. Furthermore, 10 mass% of a typical binder like polyether sulfone (PES) is added to reach 100 mass%. The aforementioned components are mixed in the vessel (not shown) and loaded into a reservoir connected to a syringe 1.

The syringe 1 is provided with a nozzle 2 which is electrically conductive in contrast to the reservoir and the syringe 1, which are normally made from plastic. An electrical potential 5 is applied between the conductive nozzle 2 of the syringe 1 and the ground potential as is disclosed in Figure 1. The ground potential is connected to a plate which carries a bowl with a coagulation bath 3 inside described later.

Therefore, an electric field is generated around the liquid due to the applied high voltage which could be 1 kV and even more. As soon as the electric field reaches a critical strength, the Taylor cone at the outlet of the nozzle 2 admits a jet of liquid droplets from the dispersion solution leaving the nozzle 2. At the same time, the solvent from the droplets progressively evaporates, leaving them more and more charged. The jet of droplets is directed to the coagulation bath 3 forming a mainly vertical jet. For this reason and upon landing in the non-solvent bath respective coagulation bath 3 the droplets flatten.

The flattening of the droplets is accompanied by a particle shape formation process. Because the remaining solvent within the particles rapidly exchanges with the nonsolvent liquid inside the coagulation bath 3 being demineralized water. Furthermore, the rapid exchange of the remaining solvent of the droplet with the non-solvent (demineralized water) creates pores throughout the particles. The unstructured polymeric binder within the particles maintains a dynamic equilibrium between dissolving and precipitating out. As all the solvent diffuses into the non-solvent bath of the coagulation bath 3 the non-solvent, i.e. the polymeric binder and the aluminium oxide in the example, solidifies the shape of the particle. This results in the formation of solid particles 4 which can be filtered from the coagulation bath 3 and sintered.

For this reason, an additional sintering oven (not shown) is used in order to burn out any residual components from the filtered and shaped particles 4. This is conducted by using temperatures up to 1000°C. The dwell time may be more than one hour. In the example a dwell time of approx. three hours has been found to be preferred. The filtered and shaped particles 4 are treated with a temperature inside the oven which raises according to a ramp with ramp rates of approx. 300°C per hour. At least 100°C per hour must be applied.

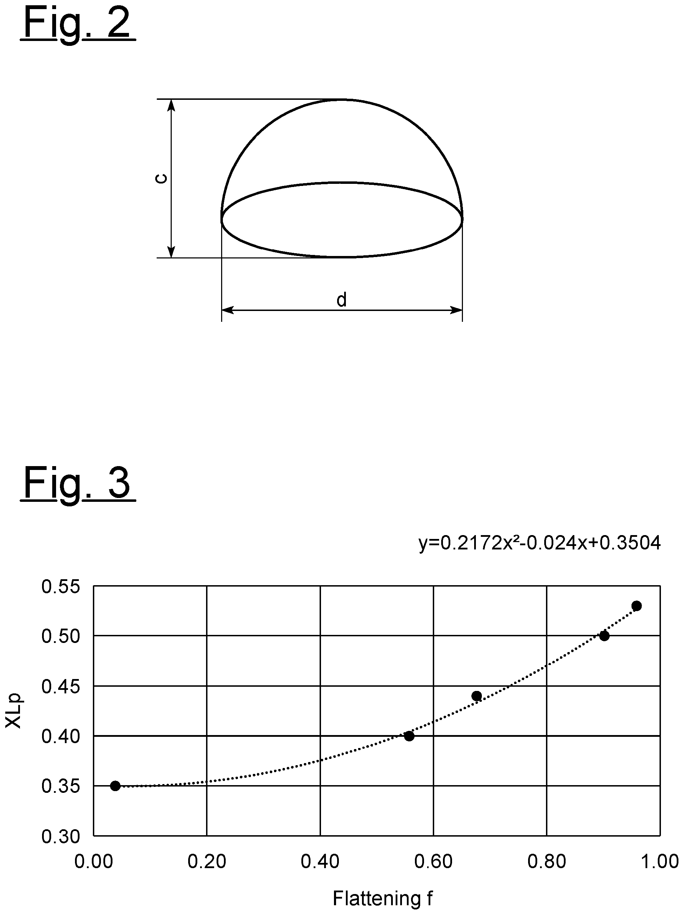

After such a treatment, the ceramic particles 4 show a platelet-like shape as is shown in principle in Figure 2. Indeed, the particles 4 show a half-spherical character with a diameter d and a cross section c. Therefore, a flattening f can be defined as follows:

$$f=(d-c)/d.$$

In the following table 1 several particles 4 and their dimensions as well as the resulting water absorption XLp are collected.

| d, µm | c, µm | Flattening | XLp |
|---|---|---|---|
| 26,20 | 25,20 | 0,04 | 0,35 |
| 34,10 | 15,10 | 0,56 | 0,40 |
| 21,00 | 6,80 | 0,68 | 0,44 |
| 36,80 | 3,60 | 0,90 | 0,50 |
| 45,20 | 1,87 | 0,96 | 0,53 |

Indeed, the water absorption XLp is measured as the critical liquid concentration beyond which particles cannot absorb any more liquid. This is described as liquid weight fraction in the mixture of water and particles XLp. Indeed the formula

$$\text{final weight - initial weight / initial weight}$$

is used to calculate the values XLp by measuring the weight of a sample of particles 4. These values disclosed in table 1 are shown in the diagram according to Figure 3. The flattening f is depicted on the x-axis whereas the y-axis shows the values of the water absorption XLp. Furthermore a calculated curve showing a. possible dependency is represented by a dotted line. From Figure 3 it can be seen that increasing the flattening f of the particles 4 increases water absorption XLp. This can be explained due to the fact that an increased flattening f results in a growing surface which in combination with the intrinsic porosity of the particles 4 leads to an increasing capability of absorption.

The shaped and filtered particles 4 show a porosity between 5% and 65%, preferably between 10 % and 50 %. The pore size is found to be in the range between 50 nm and 1000 nm with an average around 100 nm up to 500 nm. The pore size and porosity is measured by Mercury intrusion porosimetry (MIP) which is a powerful technique utilized for the characterization of pore size distribution, pore volume and porosity of a variety of solid and powder materials as is known e.g. from Wikipedia.

**Claims**

1. A process to make fluid absorbing ceramic particles (4) comprising the following steps:

preparing a ceramic dispersion solution using at least a ceramic, a solvent and a polymeric binder;
using a spraying method, especially the electro spraying method, to direct fine droplets of the dispersion solution leaving a nozzle (2) in a mainly vertical jet to a coagulation bath (3) containing a non-solvent liquid with respect to the sprayed solution;

flattening the droplets inside the coagulation bath (3) with the non-solvents solidifying the shape of the particles (4);
finally filtering and sintering the solid ceramic particles (4).

2. A process according to claim 1, wherein the particles (4) define a half sphere with a given diameter (d) and a cross section (c) of the particles (4).

3. A process according to any of the preceding claims, wherein the particles (4) have a platelet shape with a spheroid character.

4. A process according to any of the preceding claims, wherein the particles (4) show a flattening f with f=(d-c)/d.

5. A process according to any of the preceding claims, wherein increasing the flattening (f) results in increasing the fluid absorption and especially the water absorption.

6. A process according to any of the preceding claims, wherein the dynamic viscosity of the dispersion solution ranges from 100 to 300 mPas.

7. A process according to any of the preceding claims, wherein the content of the ceramic in the dispersion solution ranges from 40 to 60 mass%, especially from 40 to 50 mass%.

8. A process according to any of the preceding claims, wherein the particles (4) in the dispersion solution have a diameter of 0.2 to 0.5 $\mu$m with almost a round shape.

9. A process according to any of the preceding claims, wherein the ceramic particles (4) are oxide-based ceramic particles (4), e.g. aluminium oxide ($Al_2O_3$).

10. A process according to any of the preceding claims, wherein the coagulation bath (3) uses clean water as a basis, optionally with additives to lower the surface tension.

11. A process according to claim 10, wherein the clean water is demineralized water.

12. A process according to any of the preceding claims, wherein the duration of coagulation in the coagulation bath (3) is at least 1 h, mainly several h up to approximately 8 h.

13. A process according to any of the preceding claims, wherein the temperature of the coagulation bath (3) is set to 15°C up to 40°C.

14. A process according to any of the preceding claims, wherein the shaped and filtered particles (4) show a porosity between 5% and 65%, preferably between 10 % and 50 %.

15. Fluid absorbing ceramic particles (4) produced based on a process according to any of the claims 1 to 14.

16. A device to make fluid absorbing ceramic particles (4) especially according to a process of any of the claims 1 to 14, comprising a vessel to mix a ceramic, a solvent and a polymeric binder in order to get a ceramic dispersion solution, a spraying unit, especially an electro spraying unit, with at least a nozzle (2) for forming fine droplets from the precursor solution, a coagulation bath (3) to receive a mainly vertical jet of the fine droplets, and a filter followed by a sintering oven in order to burn out any residual components from the filtered and shaped solid ceramic particles (4).

**Amended claims in accordance with Rule 137(2) EPC.**

1. A process to make fluid absorbing ceramic particles (4) comprising the following steps:

preparing a ceramic dispersion solution using at least a ceramic, a solvent and a polymeric binder;
using a spraying method, especially the electro spraying method, to direct fine droplets of the dispersion solution leaving a nozzle (2) in a mainly vertical jet to a coagulation bath (3) containing a non-solvent liquid with respect to the sprayed solution;
flattening the droplets inside the coagulation bath (3) with the non-solvents solidifying the shape of the particles (4),
wherein the particles (4) define a half sphere with a given diameter (d) and a cross section (c) of the particles (4); finally filtering and sintering the solid ceramic particles (4).

2. A process according to any of the preceding claims, wherein the particles (4) have a platelet shape with a spheroid character.

3. A process according to any of the preceding claims, wherein the particles (4) show a flattening f with f=(d-c)/d.

4. A process according to any of the preceding claims, wherein increasing the flattening (f) results in increasing the fluid absorption and especially the water absorption.

5. A process according to any of the preceding claims, wherein the dynamic viscosity of the dispersion solution ranges from 100 to 300 mPas.

6. A process according to any of the preceding claims, wherein the content of the ceramic in the dispersion solution ranges from 40 to 60 mass%, especially from 40 to 50 mass%.

7. A process according to any of the preceding claims, wherein the particles (4) in the dispersion solution have a diameter of 0.2 to 0.5 $\mu$m with almost a round shape.

8. A process according to any of the preceding claims, wherein the ceramic particles (4) are oxide-based ceramic particles (4), e.g. aluminium oxide ($Al_2O_3$).

9. A process according to any of the preceding claims, wherein the coagulation bath (3) uses clean water as a basis, optionally with additives to lower the surface tension.

10. A process according to claim 10, wherein the clean water is demineralized water.

11. A process according to any of the preceding claims, wherein the duration of coagulation in the coagulation bath (3) is at least 1 h, mainly several h up to approximately 8 h.

12. A process according to any of the preceding claims, wherein the temperature of the coagulation bath (3) is set to 15°C up to 40°C.

13. A process according to any of the preceding claims, wherein the shaped and filtered particles (4) show a porosity between 5% and 65%, preferably between 10 % and 50 %.

14. Fluid absorbing ceramic particles (4) produced based on a process according to any of the claims 1 to 14.

15. A device to make fluid absorbing ceramic particles (4) especially according to a process of any of the claims 1 to 14, comprising a vessel to mix a ceramic, a solvent and a polymeric binder in order to get a ceramic dispersion solution, a spraying unit, especially an electro spraying unit, with at least a nozzle (2) for forming fine droplets from the precursor solution, a coagulation bath (3) to receive a mainly vertical jet of the fine droplets, and a filter followed by a sintering oven in order to burn out any residual components from the filtered and shaped solid ceramic particles (4).

# <u>Fig. 1</u>

Taylor cone

# Fig. 2

# Fig. 3

$y=0.2172x^2-0.024x+0.3504$

## EUROPEAN SEARCH REPORT

**Application Number**

EP 24 19 8983

### DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | CN 208 034 947 U (UNIV SHANGHAI JIAOTONG) 2 November 2018 (2018-11-02) * claims 1-8; figures 1-3; examples 1, 2 * | 1-16 | INV. C04B38/00 C04B35/111 C04B35/626 |
| X | CN 111 484 351 A (XINXING YUANJIAN TIANJIN NEW MATERIAL TECH CO LTD; UNIV TSINGHUA) 4 August 2020 (2020-08-04) | 1-15 | C04B35/634 C04B35/638 B01J20/08 |
| A | * claims 1-10; examples 1-6 * | 16 | B01J20/30 |

----- 

**TECHNICAL FIELDS SEARCHED (IPC)**

C04B
B01J

The present search report has been drawn up for all claims

| Place of search | Date of completion of the search | Examiner |
|---|---|---|
| The Hague | 5 March 2025 | Süzük, Kerem Güney |

EPO FORM 1503 03.82 (P04C01)

## ANNEX TO THE EUROPEAN SEARCH REPORT
## ON EUROPEAN PATENT APPLICATION NO.

EP 24 19 8983

This annex lists the patent family members relating to the patent documents cited in the above-mentioned European search report.
The members are as contained in the European Patent Office EDP file on
The European Patent Office is in no way liable for these particulars which are merely given for the purpose of information.

05-03-2025

| Patent document cited in search report | | Publication date | Patent family member(s) | Publication date |
|---|---|---|---|---|
| CN 208034947 | U | 02-11-2018 | NONE | |
| CN 111484351 | A | 04-08-2020 | NONE | |

EPO FORM P0459

For more details about this annex : see Official Journal of the European Patent Office, No. 12/82

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- CN 217972896 U
- CN 106984290 B

- WO 2017216367 A1